# EUROPEAN PATENT APPLICATION

(11) **EP 2 319 738 A1**
(43) Date of publication of application: **11.05.2011**
(21) Application number: 09252568.2
(22) Date of filing: 06.11.2009
(51) Int. Cl.: B60R 25/04, G07B 15/02

(54) **Wireless communcations system and method**

(71) Applicant: Thales Holdings UK Plc, Addlestone, Near Weybridge, Surrey KT15 2NX (GB)
(72) Inventor: Bull, Tony c/o Thales Holdings UK Plc, Addlestone Nr Weybridge Surrey KT152NX (GB)
(74) Representative: Round, Edward Mark

(57) **Abstract**

A communications network comprises a plurality of communications broadcasters each operable to generate a location signal in which an authentication signal is embedded and to broadcast the location signal, and a receiver operable to receive the location signals. The receiver is operable to determine, on the basis of the location signals, geo-location information defining a geo-location of said receiver. The receiver is further operable to pass on to a third party, portions of the received signals from which the geo-location has been derived, including the embedded authentication signals. The third party can then authenticate the geo-location by reference to the authentication signals.

## Description

The present invention concerns geo-location systems, and particularly geo-location systems using satellite based communications networks.

Satellite based navigation systems are now commonplace in many environments. In particular, hand held or otherwise mobile devices can now be configured to seek and receive signals broadcast from satellites, and to triangulate from known characteristics of those signals to provide an accurate determination of geo-location.

Using mapping technology, such geo-location devices have developed into navigation systems, and information systems. Navigation systems using geo-location have enabled users to determine existing position, and to plan routes to desired destinations, with ease. The availability of a geo-location determination enhances the use of an information system, such that a user can now interrogate a device to find information on local services. This adds convenience, and provides a user with a more relevant search result set than might otherwise be the case.

Thus, a receiver capable of determining a geo-location provides a location reading that can be trusted by the user of the receiver, to the extent that the user trusts the receiver. Of course, over time, the level of trust that a user places in a receiver can develop, on the basis of experience.

However, in some circumstances, a user may wish to deliver information to a third party regarding the user's location. In such a case, the third party is dependent not only on the reliability and trustworthiness of the receiver, but also on the trustworthiness of the user.

This is unacceptable in circumstances where the third party requires reliable information as to the geo-location of the user. For example, road usage tolling involves establishing whether or not a user has used a stretch of road and on that basis charging the user for that usage. Traditionally, this has been achieved by providing a physical barrier in the road at which payment is taken from a road user.

More recently, tolling has been implemented by positioning cameras at toll stages, the cameras being operable to capture images of vehicle registration plates. By performing image enhancement, data on a vehicle registration plate can be identified and cross-referenced with a database of vehicles, and a user associated with the matching vehicle can then be billed (or in a more automated approach, the user's account can be debited). This is the basis of the London Congestion Charge system.

In both of the above examples, there can be little dispute that, when a vehicle has crossed a toll stage (either a physical barrier, or a bank of cameras), it has been established to have been in the physical location of the toll stage. However, to reach this level of certainty, expensive infrastructure and equipment (and, in many cases, human operators) are required.

It is desirable to reduce infrastructure expense, and to automate as much as possible, in order to provide a level of certainty as to geo-location to users and to third parties.

A straightforward arrangement could be provided whereby a satellite receiver capable of determining its geo-location is placed in each road vehicle intending to use a tolled stretch of road. The receiver would then transmit its determined geo-location, either from time to time or on demand, to a base station. The base station would then be able to determine, from received geo-location data, usage of tolled stretches of road by recognised road users and respond accordingly (either by sending physical invoices or by setting in train an automated payment process). This system is entirely workable, from a technical perspective, but from a commercial perspective it is not sufficiently trustworthy.

This is because satellite geo-location signals are, by their nature, of a structure which is in the public domain. As a result, an unscrupulous user could provide modified information, indicating a false location. This type of act is known as "spoofing". As a result, a user could obtain commercial benefit, by submitting false information on the basis of which the user could claim to be in a location different from that which would otherwise give rise to a tolling charge.

Administrators of systems reliant on receiving genuine geo-location information would thus be discouraged from implementing a system such as that described above, for fear that they would fall victim to fraudulent behaviour and thus suffer commercial loss.

Such administrators would be keen to obtain a system which provides greater certainty as to the reliability of location information of which they are in receipt.

In situations where the location of the user is a critical part of a process, this lack of trustworthiness (in that there is a known way of circumventing the process) may be an obstacle to use of geo-location. This is particularly the case where technical reliability is a key component of a financial transaction, and can impact on the transaction in two ways, either that a user abuses the system to provide fraudulent location information, or that an administrator cannot prove, beyond reasonable doubt, that a user's location information as received by the administrator is an accurate representation of the physical location of the user at the time the location reading was made.

In this context, geo-location has not been widely adopted in commercial infrastructure for such uses. As a result, administrators of systems reliant on identifying the location of a particular user have needed to resort to more complex approaches.

One such approach would be the use of photographic information collected from specialist equipment as discussed above, at additional installation and operational expense.

Another such approach would involve the distribution and installation of trusted receivers, which would be proprietary equipment designed to be tamper resistant (or at least tamper evident), to discourage spoofing. This has the disadvantage of being expensive to install, particularly if it requires widespread installation to many thousands of vehicles, as would inevitably be the case. Also, such anti-spoofing measures do not overcome the problem, in that a particularly determined user would still tamper with such a device, despite anti-tamper measures being in place. Such an approach also does not allow a location assertion to be transmitted to a remote third party at present, and relies on roadside detection (at additional installation expense).

In general terms, an aspect of the invention provides a computer network comprising a plurality of communications broadcasters each operable to generate a unique authentication signal, to generate a location signal in which said authentication signal is embedded and to broadcast said location signal, and a receiver operable to receive location signals from at least some of said communications broadcasters and to determine, on the basis of said received location signals, geo-location information defining a geo-location of said receiver, said receiver further being operable to send said geo-location information with at least a portion of each of said received location signals to an authenticator operable to cross check said received location signals in which said authentication signals are embedded with said geo-location information.

The receiver may comprise storage means operable to store portions of received location signals, the portions being those on the basis of which the receiver determines said geo-location.

Since the authentication signal is produced by a third party to the receiver, the receiver is unable to replicate (i.e. spoof) the authentication signal. In one embodiment, the authentication signal may be time varying.

In short, a signal received from the broadcaster (which, in use, may be a geo-orbital satellite) is distinguishable in the usual way by a receiver, such as by correlating a recognisable feature of the signal. Such a recognisable feature may be a correlatable sequence, such as a Gold code. The timing of the Gold code in the signal can be adopted as a timing signal. Relative timings of correlation peaks found at the receiver for respective Gold codes (and thus for respective satellites) can be used to triangulate a geo-location.

The signal also comprises an embedded authorisation signal. This can comprise information used for other reasons (such as almanac data) not relevant to the present geo-location application. The presence of the embedded authorisation does not interfere with the above mentioned correlation at the receiver. The intent is to provide a further layer of information that can only be identified and interpreted by a third party with the means to decode the information. In one embodiment, the authorisation signal is constructed by encoding using a further spreading code, which code is not available for use by unauthorised users. The authenticator, as mentioned above, has access to this code and thus has the means to correlate with that code and thus determine correlation peaks over the portions of signal submitted by the receiver.

Another aspect of the invention provides a computer network comprising a plurality of communications broadcasters operable to generate a location signal in which an authentication code is embedded and to broadcast said location signal, and a receiver operable to receive said location signals and to determine, on the basis of said location signals, geo-location information defining a geo-location of said receiver, said receiver further being operable to send said geo-location information with at least a portion of each of said received location signals and to send said geo-location information with said embedded authentication codes to an administrator operable to receive said geo-location information and said received location signals, and to send said received location signals to said base station for authentication of said geo-location.

Another aspect of the invention provides a computer network comprising a base station operable to transmit an authentication code, a plurality of communications broadcasters each operable to generate a location signal in which an authentication code is embedded and to broadcast said location signal, and a receiver operable to receive said location signals and to send said received location signals to an authenticator operable to establish a geo-location from the relative times of reception of said authentication code by said receiver from said plurality of communications broadcasters.

Although it may be useful for the receiver to determine a geo-location itself, it is not essential. In this latter mentioned aspect of the invention, the determination of the geo-location takes place at the authenticator. It will be appreciated that, due to limitations on modification of the operation of the authenticator, there may be technical reasons why it would not be possible to implement this arrangement in all circumstances.

In one embodiment of the invention, each broadcaster comprises an orbital satellite.

In one embodiment of the invention, four or more orbital satellites are provided.

In one embodiment of the invention, said receiver is operable to receive and process signals from at least four orbital satellites.

In one embodiment of the invention, the authentication code comprises a time varying stream of numeric data.

Another aspect of the invention provides a wireless communications receiver, operable to receive incoming signals from geo-orbital satellites, said receiver comprising storage means for storing portions of said received signals and operable to determine from said signals a geo-location, said receiver operable to transmit geo-location information describing said geo-location with said stored portions to a third party device.

Another aspect of the invention provides a base station for managing a geo-location operation, operable to receive a wireless signal from a remote device, said signal comprising, in use, geo-location information and portions of satellite transmitted signals, and processing means operable to authenticate said geo-location information on the basis of said portions of said satellite transmitted signals.

In one embodiment, the base station is further operable to transmit an authentication signal to geo-orbiting satellites, for embedding in geo-location signals to be transmitted by said satellites.

The authentication code may be time varying.

The authentication code may be constructed so as to inhibit replication by a third party.

The authentication code may comprise a binary sequence. Each broadcaster may comprise spreading means operable to spread a time stamp with respect to said authentication code, across a wideband spectrum.

Although the above discussion has been concerned solely with the example implementation of such an arrangement in a road tolling scheme, the reader will appreciate the applicability to other areas. For example, tachographs are used to record vehicle activity and recent examples are digital devices which can be capable of transmitting vehicle activity information to a remote location, by a wireless communication means. Incorporating a geo-location functionality into a tachograph with trusted geo-location information would provide an analyser of such information with useful additional confidence on driver and vehicle behaviour. If the location information is attestable, then its reliability in the event of legal proceedings would be substantially more useful than otherwise.

Although all of the above examples specify apparatus supplied to perform specific operations, the reader will appreciate that other aspects of the invention may comprise computer program products. For instance, a computer program product could be provided to configure a pre-existing satellite to operate as a broadcaster as previously described. A computer program product could be provided to configure a general purpose radio communications device to operate as a receiver as previously specified. This particularly applies to a general purpose radio communications device suitable for configuration in line with the general provisions of software defined radio.

The computer program product could be provided as a storage means, storing computer executable instructions. Alternatively (and perhaps more conveniently for a satellite operating in situ) the computer program produce could be provided as a signal receivable by a computer to cause the computer to become suitably configured.

The computer program product may comprise instructions representative of a complete computer program, or may comprise instructions representative of an update to an existing computer program.

Location information with increased trustworthiness would also be useful in the event of e-commerce. If an electronic transaction were taking place, in otherwise unusual circumstances, it would be useful for an administrator, in a remote location, to be able to determine if a purchaser is where he claims to be located. Providing an attestable geo-location would contribute to the reliability of electronic financial transactions and may reduce the possibility of a fraudulent transaction taking place.

Specific embodiments of the invention will now be described with reference to the accompanying drawings, in which:
Figure 1 is a schematic diagram of a satellite enabled communications network in accordance with a specific embodiment of the invention;
Figure 2 is a schematic diagram of a receiver of the communications network illustrated in Figure 1; and

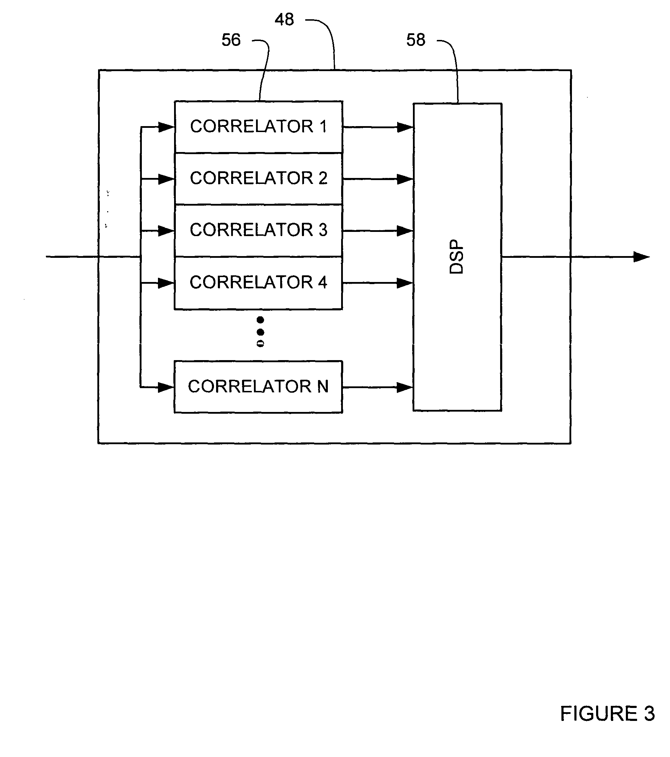

Figure 3 is a schematic diagram of a location calculator of the receiver illustrated in Figure 2.

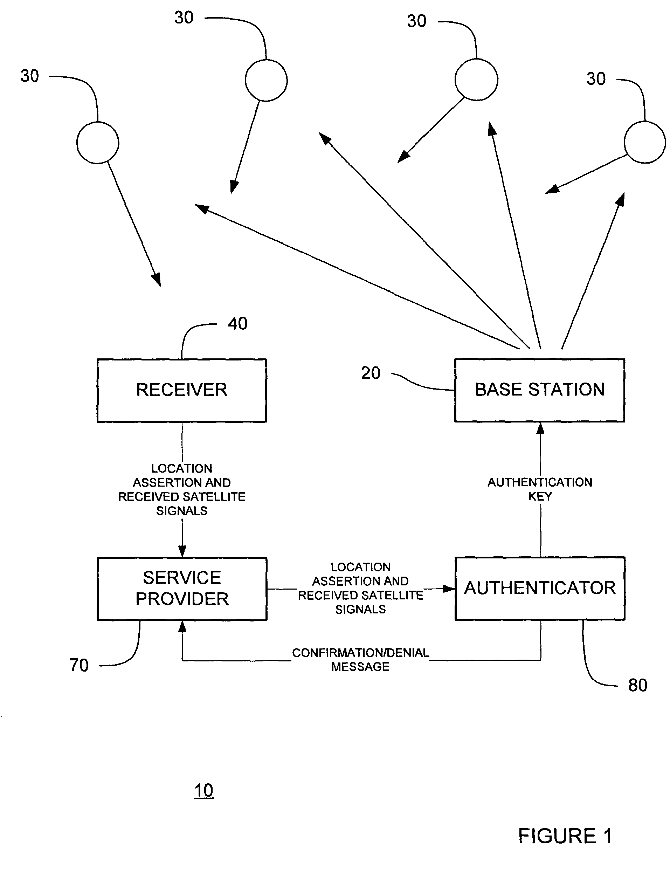

As shown in Figure 1, a communication system embodying an example of the present invention is illustrated. The system 10 comprises a base station 20, a constellation of geo-orbital satellites 30 (of which four are illustrated for simplicity), a wireless receiver 40, a service provider 70 and an authenticator 80.

The base station 20, satellites 30, and receiver 40 generally form the basis for a commonplace geo-location system. The example below is illustrative of the GPS system which is a US government sponsored system because publicly available information about GPS will augment the understanding of the invention. The reader will understand that the Galileo system, in development by the European Space Agency, COMPASS (by the Chinese Space Agency) and GLONASS (currently under redevelopment by the Russian and Indian space agencies) operate on similar principles.

In a conventional system, a satellite transmits a unique authentication code embedded in the location signal. The receiver is able to receive signals from the satellites, identifying that signal received from each satellite and recovering timing delays of the signal from the satellite. On the basis of prior knowledge of positions of satellites (or on the basis of recoverable position information held in the received signal), and triangulation of the relative time of receipt of satellite signals, the receiver is able to calculate its location.

In a conventional system, a base station controls a satellite constellation, providing support and configuration signals as the need arises. Each satellite broadcasts a navigation signal. This navigation signal is broadcast on a number of frequencies, and encoded in several ways. In GPS (and as anticipated in Galileo), a basic navigation signal (comprising a satellite clock signal) is broadcast with CDMA encoding with a spreading code which is publicly available. A more extensive signal is broadcast alongside this basic signal, which is generated in a ay which is not known to the receiver, and which can only be decoded by authorised users.

A receiver in such a system is capable of receiving signals from several satellites simultaneously, demodulating the signals and correlating the signals to identify the satellite from which the signal was received. On the basis of prior knowledge of positions of satellites, and triangulation of the relative time of receipt of satellite signals, the receiver would be able to calculate its location.

In this embodiment, enhanced functionality provides a third party with additional information on the basis of which it can assure itself that location information provided by a receiver is genuine.

As illustrated, the base station 20 controls the satellite to maintain position and to maintain an accurate on board absolute time reference.. The satellites 30 encode a timing signal, synchronised to the on board absolute time reference, with their own unique codes. In this example, Gold codes are used as the timing signal, each Gold code being unique to the satellite concerned.

These encoded signals are then transmitted back to earth. The receiver 40 receives signals from available satellites. Preferably, the receiver 40 is capable of receiving signals from four (or more) satellites. It will be understood that geo-location can be attempted using the signals from three satellites but doing so requires knowledge of absolute time, which may not always be possible and would preclude later verification of the location on the authenticator 80. By using the fourth satellite signal, such knowledge of absolute time can be eliminated from the geo-location calculation (which is essentially a simultaneous equation calculation to eliminate unknown variables).

Also embedded in the timing signal from each satellite is an authentication signal. This authentication signal (details of which are not relevant to this disclosure) comprises a stream of time varying binary information. The authentication signal is, in this embodiment, generated by the satellite. The method by which the time varying signal is produced is known to the authenticator 80 but not the wireless receiver 40. It is only necessary to specify here that the authenticator should be able to refer back, on request, to determine what the authentication signal was at a particular time, for a particular satellite, or to regenerate, on request, the authentication signal produced at that time. The authentication signal is spread across the useful spectrum of the signal, with a spreading method not known to the wireless receiver 40 - again, it is not necessary for an understanding of the invention for a detailed example of this commonplace approach.

The receiver 40 passes forward its location assertion, i.e. its own calculation of geo-location, together with those portions of the satellite signals on the basis of which it is purported to have calculated its geo-location. These signals are passed to the service provider 70. The service provider 70 is the entity which has need of confidence in the information regarding the receiver's geo-location. This might be a computer system managed and operated by, for example, a road tolling operator, a tachograph record administrator or the like. The service provider 70 passes forward this information to the authenticator 80. The authenticator 80 assesses, on the basis of the received information, whether the location assertion corresponds with the extracted authentication signals. On that basis, it passes back a message to the service provider 70 confirming or denying the assertion.

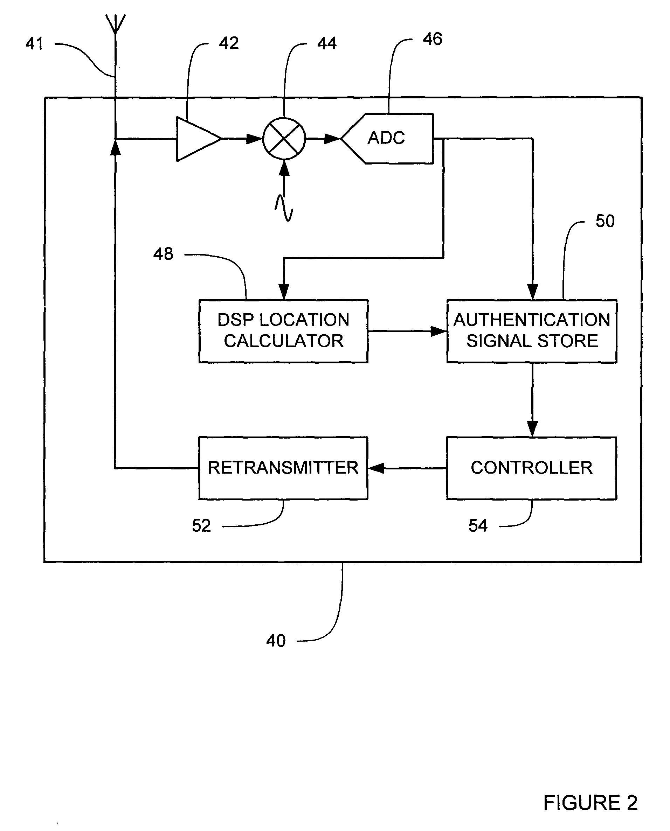

As shown in Figure 2, the means by which the receiver receives and processes signals is illustrated. The receiver comprises an antenna 41 operable to receive signals transmitted by geo-orbiting satellites 30. These signals are passed through an amplifier 42 and are frequency shifted down 44. The resultant signal is passed through an analogue to digital converter (ADC) 46.

The digital signal is then passed to a location calculator 48 and to an authentication signals store 50. The authentication signal store 50 stores information relating to a portion of signal processed by the location calculator.

The location calculator 48 calculates, on the basis of the received information, a location assertion, and then passes this to the authentication signal store for storage in association with the digitised original signals. These signals are passed to a controller 54, which controls overall operation of the device, and which passes information to a re-transmitter 52. The re-transmitter 52 is operable to generate a wireless communication signal, with the antenna 41, for transmission of the location assertion, and the associated digitised original signals, to the service provider 70.

It will be appreciated that instantaneous or real time verification of location assertions is not always required. Although the described example provides for wireless communication of the information to an authenticator, an alternative embodiment could involve storage of the information, on an accessible storage device, which can either be removed for use in another computer device or can be connected to either by wireless or wired means to gain access to content. The information could even be stored on a portable storage device, such as a CD ROM, and perhaps mailed to an authenticator.

In use, the authenticator 80 will be able to assess, on the basis of the original data, and the location assertion, if the location assertion can correspond with the satellite positions at the time the portion of authentication signal contained in the original was received by the receiver 40. That is, the receiver 40 receives the authentication signal which is a type of "signature" on the signals received from the satellites 30, which it is not capable of replicating or manipulating in a predictable manner, because it does not have knowledge of the manner in which the authentication signal was originally generated. In addition, it will not have knowledge of the manner in which the authentication signal is spread across the spectrum. Accordingly, the authenticator 80 is able to establish, from its records, whether the authentication signals are present, and whether their relative timing differences are correct in relation to the location assertion.

In use, the authenticator 80 will be able to assess, on the basis of the original data, and the location assertion, if the location assertion can correspond with the satellite positions at the time the portion of authentication signal contained in the original was received by the receiver 40. That is, the receiver 40 receives a "signature" on the signals received from the satellites 30, which it is not capable of replicating, because it does not have knowledge of the manner in which the authentication signal was originally generated. In addition, it will not have knowledge of the manner in which the authentication signal is spread across the spectrum. Accordingly, the authenticator 80 is able to establish, from its records, whether the authentication signals are present, and whether they are correct in relation to the location assertion.

In an alternative embodiment, the service provider does not provide the location assertion to the authenticator 80. In that case, the authenticator 80 would need to be capable of performing a search through all historical authentication codes, and provide location information to the service provider 70 for comparison with the location assertion. This might place undue workload on the authenticator 80. However, it might be useful in cases where, for whatever reason, the service provider 70 is not permitted to pass on information relating to the location of one of its client's to a third party. Data protection legislation in certain countries can give rise to such restrictions.

In an alternative embodiment, if an authenticator, in verifying received information, identifies a discrepancy between the asserted location and the associated satellite signals, leading to a location verification failure, the authenticator then explores where and when the location assertion was actually taken. In that case, the authenticator 80 would need to be capable of referring back, on the basis of the extracted authentications, and provide location information to the service provider 70 for comparison with the location assertion. This might place undue workload on the authenticator 80. However, in this case it might be useful to the service provider in investigating fraud.

In the described embodiments, specific examples have been given which exemplify or otherwise explain aspects of the present invention. It will be understood by the reader that these are examples only and very many alternative arrangements are available in the context of the invention. The above description is therefore not intended to limit the scope of protection in any way; the scope of protection sought for the invention is defined by the claims appended hereto, which may be read in conjunction with, but not limited by, the foregoing description with reference to the appended drawings.

## Claims

1. A computer network comprising a plurality of communications broadcasters each operable to generate a unique authentication signal, to generate a location signal in which said authentication signal is embedded and to broadcast said location signal, and a receiver operable to receive location signals from at least some of said communications broadcasters and to determine, on the basis of said received location signals, geo-location information defining a geo-location of said receiver, said receiver further being operable to send said geo-location information with at least a portion of each of said received location signals to an authenticator operable to cross check said received location signals in which said authentication signals are embedded with said geo-location information.

2. A network in accordance with claim 1 wherein the receiver comprises storage means operable to store portions of received location signals, the portions being those on the basis of which the receiver determines said geo-location.

3. A network in accordance with claim 1 or claim 2 wherein each broadcaster is operable to generate the authorisation signal by encoding using a spreading code, which code is not available to the receiver, and wherein the authenticator, with access to the code, is operable to determine whether said authentication signal is contained in said portions of received location signals and if such authentication signals correspond with said geo-location information.

4. A computer network comprising a plurality of communications broadcasters operable to generate a location signal in which an authentication code is embedded and to broadcast said location signal, and a receiver operable to receive said location signals and to determine, on the basis of said location signals, geo-location information defining a geo-location of said receiver, said receiver further being operable to send said geo-location information with at least a portion of each of said received location signals and to send said geo-location information with said embedded authentication codes to an administrator operable to receive said geo-location information and said received location signals, and to send said received location signals to said base station for authentication of said geo-location.

5. A computer network in accordance with any preceding claim wherein each broadcaster comprises an orbital satellite.

6. A computer network in accordance with claim 5 and comprising four or more orbital satellites.

7. A computer network in accordance with any preceding claim wherein said receiver is operable to receive and process signals from at least four orbital satellites.

8. A wireless communications receiver, operable to receive incoming signals from geo-orbital satellites, said receiver comprising storage means for storing portions of said received signals and operable to determine from said signals a geo-location, said receiver operable to transmit geo-location information describing said geo-location with said stored portions to a third party device.

9. A data processing apparatus for verifying geo-location information, operable to receive geo-location assertion information and corresponding signal information on the basis of which said geo-location assertion information is alleged to have been determined, the apparatus comprising processing means operable to decode said signal information using decoding means to identify authentication features of said signals with said geo-location information.

10. A computer program product operable to configure a general purpose radio communications device to operate as a receiver in accordance with claim 8.

11. The computer program product of claim 10 comprising a computer readable storage means, storing computer executable instructions.

12. The computer program product of claim 10 comprising a computer receivable signal.
